Europäisches Patentamt

European Patent Office

Office européen des brevets

(19)

(11) **EP 0 872 517 B1**

(12) **EUROPEAN PATENT SPECIFICATION**

(45) Date of publication and mention
of the grant of the patent:
**16.01.2002 Bulletin 2002/03**

(51) Int Cl.[7]: **C08L 23/10**, C08L 23/16

(21) Application number: **97909590.8**

(22) Date of filing: **23.10.1997**

(86) International application number:
**PCT/JP97/03826**

(87) International publication number:
**WO 98/17722 (30.04.1998 Gazette 1998/17)**

(54) **THERMOPLASTIC ELASTOMER COMPOSITION**

THERMOPLASTISCHE ELASTOMERZUSAMMENSETZUNG

COMPOSITION D'ELASTOMERE THERMOPLASTIQUE

(84) Designated Contracting States:
**DE FR**

(30) Priority: **24.10.1996 JP 28262896**

(43) Date of publication of application:
**21.10.1998 Bulletin 1998/43**

(73) Proprietors:
• **MITSUBISHI CHEMICAL CORPORATION
Chiyoda-ku, Tokyo 100-0005 (JP)**
• **Toyota Jidosha Kabushiki Kaisha
Aichi 471-8531 (JP)**
• **Kyowa Leather Cloth Co., Ltd.
Hamamatsu-shi, Shizuoka 430-0822 (JP)**

(72) Inventors:
• **NOMURA, Takao
Toyota-shi, Aichi 471 (JP)**
• **KOBAYASHI, Toshiyuki
Toyota-shi, Aichi 471 (JP)**
• **KAKO, Chika
Toyota-shi, Aichi 471 (JP)**

• **HORIE, Takashi
Hamamatsu-shi, Shizuoka 430 (JP)**
• **NAGATA, Tsutomu
Hamamatsu-shi, Shizuoka 430 (JP)**
• **MAYUMI, Junji, Yokkaichi Plant
Yokkaichi-shi, Mie 510 (JP)**
• **ABE, Keizou, Yokkaichi Plant
Yokkaichi-shi, Mie 510 (JP)**
• **OZU, Takahiro, Yokkaichi Plant
Yokkaichi-shi, Mie 510 (JP)**
• **ARASHIRO, Yusuke, Yokkaichi Plant
Yokkaichi-shi, Mie 510 (JP)**

(74) Representative: **HOFFMANN - EITLE
Patent- und Rechtsanwälte Arabellastrasse 4
81925 München (DE)**

(56) References cited:
**JP-A- 6 256 538        JP-A- 7 137 189
JP-A- 8 199 010        JP-A- 8 302 105
US-A- 4 454 092**

**EP 0 872 517 B1**

EP 0 872 517 B1

**Description**

TECHNICAL FIELD

The present invention relates to a polyolefin thermoplastic elastomer composition. More specifically, the present invention relates to a thermoplastic elastomer composition capable of being molded into sheets which, when subjected to secondary forming such as vacuum forming, pressure forming, stamping or the like, show excellent uniform extensibility and embossing retention over a wide range of forming temperatures, and which can thus be advantageously formed into the skins of automotive parts, furniture, etc.

BACKGROUND ART

Base materials based on polyvinyl chloride resins have conventionally been used for automotive trim sheets which are used for the skins of instrument panels, door trims, etc. In recent years, however, thermoplastic polyolefin elastomer materials (hereinafter sometimes referred to simply as "TPO") began to be put to practical use in order to meet the need for light-weight automotive parts, and to meet, in consideration of environmental problems, the demands for automotive parts which can be reused and for those which can be incinerated without polluting the environment.

As a TPO, Japanese Patent Laid-Open Publication No. 1888/1994, for example, discloses a composition comprising an olefin copolymer rubber, an olefin copolymer and a crystalline paraffin, and skin materials made from the composition.

However, molded sheets produced by using as base materials conventional TPOs have the drawback that the sheets generally show insufficient extensibility when subjected to secondary forming such as vacuum forming, pressure forming or stamping, so that the products with a high draw ratio may be torn or become extremely thin at the corners.

Further, skin materials for interior trims such as instrument panels and door trims are embossed (provided with an embossed pattern) in order to impart thereto a touch of natural leather. When sheets which have been embossed in advance are subjected to secondary forming such as vacuum forming, so-called debossing (a phenomenon that the embossed pattern becomes flat) is likely to occur due to heat applied or deformation caused during the forming process. In order to prevent such debossing, there has been employed a method in which vacuum forming is conducted by using a female mold which has been embossed (provided with an embossing pattern). With this method, however, there is a problem that only an embossed pattern which is flatter than that of the mold is obtained.

As another method for preventing debossing, it can be considered to lower the forming temperature. In this case, however, although the embossing retention is surely improved, shaping cannot be done as designed (defective drawing), or sufficiently high adhesion strength cannot be obtained when a sheet is adhered, simultaneously with the forming thereof, to a wood flour board or to a structural material made from crystalline polypropylene resin or the like. Thus, there is a problem that the range of forming temperatures which can meet both the embossing retention and the shaping requirements is extremely narrow.

DISCLOSURE OF THE INVENTION

In view of the aforementioned problems in the prior art, the present inventors have made earnest studies on thermoplastic elastomer compositions which are excellent in uniform extensibility and embossing retention, which enable a successful secondary forming over a wide temperature range, and which are excellent in handling properties at the time of processing, and, as a result, finally accomplished the present invention.

Thus, the thermoplastic elastomer composition of the present invention comprises a crosslinked polymer (II) obtained by subjecting a composition (I) comprising 10 to 75% by weight of the following component (A) and 90 to 25% by weight of the following component (B) to a dynamic thermal treatment which is carried out in the presence of an organic peroxide, and at least one component selected from the following components (C) and (D) in an amount of not more than 200 parts by weight for 100 parts by weight of the total of the components (A) and (B), and has the following physical properties <1> to <4>:

component (A) : a resin composed of the following components (A1) and (A2):

component (A1): 50 to 100% by weight of a crystalline propylene polymer resin, and
component (A2): 50 to 0% by weight of an olefin resin other than component (A1);

component (B): an elastomer composed of the following components (B1) and (B2):

component (B1): 10 to 100% by weight of a propylene-olefin copolymer rubber having a propylene content of 65 to 90% by weight, and
component (B2): 90 to 0% by weight of an olefin copolymer rubber other than component (B1);

component (C): 5 to 200% by weight of at least one of the following components (C1) and (C2):

component (C1): an ethylene copolymer resin having a density of 0.94 $g/cm^3$ or lower, and
component (C2): a crystalline propylene polymer resin; and

component (D): 0 to 100% by weight of a copolymer rubber of ethylene and an $\alpha$-olefin having 3 to 12 carbon atoms;

physical properties

<1> the storage shear modulus G' in dynamic solid viscoelasticity measurement at 100°C is in the range of $3 \times 10^6$ to $2 \times 10^7$ Pa, and the difference g between the storage shear modulus G' at 100°C and that at 140°C, represented by the following equation (1) is not more than 0.6:

$$g = \log G' \,(100°C) - \log G' \,(140°C) \tag{1};$$

<2> the storage shear modulus G' in dynamic solid viscoelasticity measurement at 190°C is in the range of $1 \times 10^4$ to $1 \times 10^5$ Pa;
<3> the stress relaxation index r represented by the following equation (2), which is an index for stress relaxation from the stress at a point of $10^{-1}$ seconds to that at a point of $10^3$ seconds after 300% strain has been given at 190°C, is 0.38 or more:

$$r = \{\log G(t) \,(\text{after } 10^{-1} \text{ seconds}) - \log G'(t) \,(\text{after } 10^3 \text{ seconds})\} / 4 \tag{2}$$

(wherein G(t) represents a relaxation modulus); and
<4> the 100% modulus at 100°C of a 0.35 mm thick sheet is not more than 15 $kgf/cm^2$.

According to a preferred embodiment of the present invention, the composition (I) further comprises at least one component selected from the following components (E) and (F) in an amount of 10 to 250 parts by weight for 100 parts by weight of the component (A):

component (E): a low-molecular weight olefin compound having a melt flow rate of 100 g/10 min or higher as measured in accordance with ASTM-D1238 at 230°C under a load of 2.16 kg, and a melting point of 80°C or higher; and
component (F): a propylene block copolymer composed of the following block moieties (a) and (b):

block moiety (a): a block moiety having a propylene content of 90 to 100% by weight, and a melt flow rate at 230°C under a load of 2.16 kg of 50 g/10 min or higher, selected from the following (a1), (a2) and (a3):

(a1): propylene homopolymer block moiety,
(a2): a binary random copolymer block moiety consisting of propylene and ethylene or an $\alpha$-olefin having 4 to 12 carbon atoms, and
(a3): a moiety containing propylene homopolymer block moiety and a binary random copolymer block moiety consisting of propylene and ethylene or an $\alpha$-olefin having 4 to 12 carbon atoms; and

block moiety (b): a block moiety having an ethylene content of 20 to 100% by weight, selected from the following (b1), (b2) and (b3):

(b1): ethylene homopolymer block moiety,
(b2): a binary random copolymer block moiety consisting of ethylene and an $\alpha$-olefin having 3 to 12 carbon atoms, and

(b3): a moiety containing ethylene homopolymer block moiety, and a binary random copolymer block moiety consisting of ethylene and an $\alpha$-olefin having 3 to 12 carbon atoms.

BEST MODE FOR CARRYING OUT THE INVENTION

(1) Components

Component (A): Resin

Component (A1): Crystalline propylene polymer resin

The component (A) constituting the composition (I) for use in the present invention comprises a crystalline propylene polymer resin (component (A1)).

As the crystalline propylene polymer resin, it is possible to use propylene homopolymer, a propylene random copolymer that is a copolymer of 90% by weight or more of propylene and 10% by weight or less of another $\alpha$-olefin such as ethylene, butene-1 or hexene-1, or a propylene block copolymer containing 30% by weight or less of an $\alpha$-olefin other than propylene, composed of 50 to 95% by weight of propylene homopolymer block and 5 to 50% by weight of a copolymer block consisting of propylene and the $\alpha$-olefin other than propylene.

The crystalline propylene polymer resin includes those ones which generally have crystallinities of 35% or higher, preferably 40 to 80% as measured by means of X-ray diffractometry.

Of these is preferably used a crystalline propylene polymer resin having a melt flow rate (MFR) of 0.01 to 100 g/10 min, preferably 0.1 to 80 g/10 min, and particularly 0.1 to 20 g/10 min as measured in accordance with ASTM-D1238 at 230°C under a load of 2.16 kg.

Those crystalline propylene polymer resins having crystallinities lower than the above-described range have the problem of embossing (embossed pattern) retention.

Further, the number-average molecular weight of the crystalline propylene polymer resin is from 35,000 to 200,000, preferably from 36,000 to 150,000, particularly from 50,000 to 150,000.

Component (A2): Another olefin resin

The component (A) constituting the composition (I) for use in the present invention can comprise, in addition to the above-described crystalline propylene polymer resin (component A(1)), another olefin resin (component A(2)).

Examples of such another olefin resin include homopolymers of $\alpha$-olefins other than propylene, such as ethylene, butene-1 and hexene-1, copolymers of two or more of these $\alpha$-olefins, and copolymers of these $\alpha$-olefins and polymerizable monomers other than $\alpha$-olefins, such as vinyl acetate, alkyl acrylate, alkyl methacrylate, acrylic acid and methacrylic acid. The olefin resin can include those copolymers containing propylene as a comonomer as long as they do not correspond to the above-described crystalline propylene polymer resin (component (A1)).

Among these olefin resins other than the crystalline propylene polymer resin, ethylene polymer resins are preferred.

The ethylene polymer resins herein refer to medium-density polyethylenes, high-density polyethylenes, linear low-density polyethylenes, copolymers of ethylene and 20% by weight or less of $\alpha$-olefins other than ethylene, such as propylene, butene-1 and hexene-1, and copolymers of ethylene and 25% by weight or less of polymerizable monomers other than $\alpha$-olefins, such as vinyl acetate, alkyl acrylate, alkyl methacrylate, acrylic acid and methacrylic acid. These polymers preferably have melt flow rates (MFRs) of 0.01 to 200 g/10 min, particularly 0.1 to 100 g/10 min as measured in accordance with ASTM-D1238 at 190°C under a load of 2.16 kg, and densities of 0.88 to 0.97 g/cm$^3$, particularly 0.89 to 0.96 g/cm. Their crystallinities measured by X-ray diffractometry are generally 35% or higher, preferably 40 to 80%.

The crystalline propylene polymer resin and the olefin resin other than the same are blended in such proportions that the former resin will be from 50 to 100% by weight, more preferably from 60 to 100% by weight of the total of these two resins. When these resins are blended in proportions not within this range, the resulting molding tends to show poor uniform extensibility upon secondary forming.

Component (B): Elastomer

Component (B1): Propylene-olefin copolymer rubber

The component (B) constituting the composition (I) for use in the present invention comprises a propylene-olefin copolymer rubber having a propylene content of 65 to 90% by weight. Since this propylene-olefin copolymer rubber has a high propylene content, it is highly compatible with the previously-mentioned crystalline propylene polymer resin (component (A1)) contained in the component (A), and can improve the uniform extensibility and embossing (embossed pattern) retention.

Specific examples of this propylene-olefin copolymer rubber include copolymer rubbers of propylene and $\alpha$-olefins other than propylene, such as ethylene, butene-1 and hexene-1.

The propylene-olefin copolymer rubber includes low- or non-crystalline polymers having crystallinities of 30% or lower as measured by X-ray diffractometry, and Mooney viscosities $ML_{1+4}(100°C)$ according to ASTM-D1646 of 10 to 200, more preferably 20 to 150.

Of these, propylene-ethylene copolymer rubber is preferred. The propylene content of the propylene-ethylene copolymer rubber is from 65 to 90% by weight, preferably from 66 to 85% by weight, particularly from 66 to 80% by weight. When the propylene-ethylene copolymer rubber has a propylene content lower than 65% by weight, the resulting molding shows poor uniform extensibility upon secondary forming. On the other hand, when the propylene-ethylene copolymer rubber has a propylene content higher than 90% by weight, the resulting molding shows impaired rubber-like properties.

Component (B2): Another olefin copolymer rubber

The component (B) constituting the composition (I) for use in the present invention can comprise, in addition to the above-described propylene-olefin copolymer rubber (component (B1)), another olefin copolymer rubber (component (B2)).

This olefin copolymer rubber is a low- or non-crystalline polymer having a crystallinity of 30% or lower as measured by means of X-ray diffractometry.

Examples of this olefin copolymer rubber (component (B2)) include copolymer rubbers of ethylene and $\alpha$-olefins having 3 to 12 carbon atoms, such as ethylene-propylene copolymer rubber, ethylene-butene-1 copolymer rubber and ethylene-hexene-1 copolymer rubber, propylene-butene-1 copolymer rubber, ethylene-propylene-butene-1 copolymer rubber, ethylene-propylene-unconjugated diene terpolymer or multicomponent copolymer rubbers, and ethylene-butene-1-unconjugated diene terpolymer or multicomponent copolymer rubbers. Of these, ethylene-propylene copolymer rubber, or ethylene-propylene-unconjugated diene terpolymer rubber is preferably used.

The unconjugated diene herein refers to 1,4-hexadiene, dicyclopentadiene, 5-ethylidene-2-norbornene, 1,7-octadiene, 1,9-decadiene, 7-methyl-1,6-octadiene and the like. Of these, dicyclopentadiene and 5-ethylidene-2-norbornene are most suitable.

The Mooney viscosities $ML_{1+4}(100°C)$ according to ASTM-D1646 of these olefin copolymer rubbers are preferably from 10 to 500, more preferably from 20 to 400.

In the case where the olefin copolymer rubber is ethylene-propylene copolymer rubber or ethylene-propylene-unconjugated diene terpolymer rubber, the propylene content thereof is preferably from 15 to 60% by weight, more preferably from 20 to 55% by weight of the total amount of ethylene and propylene.

Further, the degree of unsaturation of the olefin copolymer rubber is preferably 20 or lower, more preferably 18 or lower when shown by an iodine value.

The propylene-olefin copolymer rubber (component (B1)) and the olefin copolymer rubber (component (B2)) other than the same are blended in such proportions that the former rubber will be preferably 10 to 100% by weight, more preferably 17 to 80% by weight, particularly 20 to 60% by weight of the total amount of these two rubbers. When these rubbers are blended in proportions not within this range, the resulting molding shows poor uniform extensibility upon secondary forming, and the secondary product tends to have impaired weathering resistance. When the rubbers are blended in proportions in this range, the resulting molding shows improved embossing (embossed pattern) retention upon secondary forming.

It is also possible to use these copolymer rubbers (the components (B1) and (B2)) into which a softening agent for rubber, that will be described later, has been incorporated in advance.

In order to improve the embossing (embossed pattern) retention or matting effect, at least one component selected from the following components (E) and (F) can be incorporated, in addition to the above-described components (A) and (B), into the composition (I) of the present invention in an amount of 10 to 250 parts by weight for 100 parts by weight of the component (A).

Component (E): Low-molecular weight olefin compound

It is preferable to use component (E) because it can enhance the effect of improving the embossing (embossed pattern) retention at the time of secondary forming.

The component (E) for use in the present invention is a low-molecular- weight olefin compound having a melt flow rate (MFR) of 100 g/10 min or higher, preferably 150 to 7,000 g/10 min as measured in accordance with ASTM-D1238 at 230°C under a load of 2.16 kg, a melting point of 80°C or higher, and a crystallinity of normally 35% or higher, preferably 40 to 80% as measured by means of X-ray diffractometry.

Examples of the low-molecular weight olefin compound include ethylene homopolymers, random copolymers of ethylene and α-olefins having 4 or more carbon atoms, propylene homopolymers, random copolymers of propylene and not more than 10% by weight of other α-olefins having two or more carbon atoms, pyrolytically decomposed products of these polymers or copolymers, and those products obtained by decomposing these polymers or copolymers by the use of organic peroxides. Of these, propylene homopolymers, random copolymers of propylene and not more than 10% by weight of at least one α-olefin selected from ethylene, butene-1 and hexene-1, pyrolytically decomposed products of these polymers or copolymers, and those products obtained by decomposing these polymers or copolymers by the use of organic peroxides are preferred.

The number-average molecular weights of these low-molecular weight olefin compounds are generally in the range of 2,000 to 50,000; and it is preferable that their number-average molecular weights be in the range of 3,000 to 40,000 from the viewpoint of embossing (embossed pattern) retention. Further, the melt flow rates (MFRs) of these olefin compounds are 100 g/10 min or higher, preferably 150 to 7,000 g/10 min as measured in accordance with ASTM-D1238 at 230°C under a load of 2.16 kg. When the olefin compound has an excessively low MFR, the resulting molding has poor embossing (embossed pattern) retention.

Furthermore, the melting points of these olefin compounds are 80°C or higher, preferably 100 to 170°C, particularly 120 to 170°C as shown by melting peak temperatures in DSC (differential scanning calorimetric analysis). Those olefin compounds having excessively low melting points cannot fully produce the desired effects.

Component (F): Propylene block copolymer

It is preferable to use component (F) because it can enhance not only the effect of improving the embossing (embossed pattern) retention at the time of secondary forming but also the matting effect.

The component (F) for use in the present invention is a propylene block copolymer composed of the following block moieties (a) and (b), having a crystallinity of generally 35% or higher, preferably 40 to 80% as measured by X-ray diffractometry:

block moiety (a): a moiety having a propylene content of 90 to 100% by weight, and a melt flow rate (MFR) of 50 g/10 min or higher as measured at 230°C under a load of 2.16 kg, selected from the following (a1), (a2) and (a3) :

(a1): propylene homopolymer block moiety,
(a2): a binary random copolymer block moiety consisting of propylene and ethylene or an α-olefin having 4 to 12 carbon atoms, and
(a3): a block moiety containing propylene homopolymer block moiety and a binary random copolymer block moiety consisting of propylene and ethylene or an α-olefin having 4 to 12 carbon atoms; and

block moiety (b): a moiety having an ethylene content of 20 to 100% by weight, selected from the following (b1), (b2) and (b3):

(b1): ethylene homopolymer block moiety,
(b2): a binary random copolymer block moiety consisting of ethylene and an α-olefin having 3 to 12 carbon atoms, and
(b3): a block moiety containing ethylene homopolymer block moiety and a binary random copolymer block moiety consisting of ethylene and an α-olefin having 3 to 12 carbon atoms.

The propylene block copolymer, the component (F), can be prepared by any of the production methods described, for example, in Japanese Patent Laid-Open Publications No. 61278/1974, No. 53990/1974, No. 133393/1976 and No. 145113/1982.

The melt flow rate (MFR) of the entire propylene block copolymer composed of the above-described block moieties (a) and (b) is preferably 20 g/10 min or higher, particularly 25 to 500 g/10 min as measured in accordance with ASTM-D1238 at 230°C under a load of 2.16 kg.

Further, the melt flow rate (MFR) of the block moiety (a) contained in the propylene block copolymer is 50 g/10 min or higher, preferably 60 to 2,000 g/10 min as measured in accordance with ASTM D-1238 at 230°C under a load of 2.16 kg. When the melt flow rate (MFR) of the propylene block copolymer or that of the block moiety (a) in the propylene block copolymer is excessively low, the effect of improving the embossing (embossed pattern) retention cannot fully be attained.

In particular, when there is used a propylene block copolymer in which the amount of an α-olefin other than propylene is not more than 30% by weight of the entire block copolymer, and the percentage of the block moiety (a) in the copolymer (the total of the block moieties (a) and (b)) is from 70 to 95% by weight, a molding that is excellent in matte finish can be obtained.

It is noted that the above-described low-molecular weight olefin compound, the component (E), and the propylene block copolymer, the component (F), can be used either singly or in combination.

Component (G): Softening agent for rubber

It is preferable to incorporate a softening agent for rubber because it plays an important roll in imparting processability and flexibility to thermoplastic elastomers.

Softening agents for rubber are mineral oils which are the high-boiling point fractions of petroleum, and generally mixtures containing aromatic rings, naphthene rings and paraffin chains in combination. Those softening agents in which the number of carbon atoms contained in paraffin chains is 50% or more of the total number of carbon atoms are called paraffin-type agents; those in which the number of carbon atoms contained in naphthene rings is from 30 to 40% of the total number of carbon atoms are called naphthene-type agents; and those in which the number of carbon atoms contained in aromatic rings is 30% or more of the total number of carbon atoms are called aromatic-type agents. Of these, paraffin-type agents are preferred; and the number-average molecular weights of such agents are preferably from 200 to 2,000, more preferably from 300 to 1,600.

It is preferable to incorporate such a softening agent for rubber into the previously-mentioned component (B) in advance, or into the composition (I), that is, during the production of a thermoplastic elastomer by a dynamic thermal treatment.

Other components

The composition (I) for use in the present invention can comprise, if necessary, a variety of resins or elastomers in addition to the above-described components. Further, it is also possible to incorporate into the composition (I), when necessary, fillers such as glass fibers, talc, potassium carbonate, diatomaceous earth and silica, various additives such as weathering stabilizers, antioxidants, antistatic agents, flame retarders, dispersing agents and slip agents, pigments such as carbon black, and the like.

(2) Organic Peroxide

The organic peroxide that is used for producing a thermoplastic elastomer composition of the present invention can be either aromatic or aliphatic, and a mixture of two or more organic peroxides can also be used.

Specific examples of the organic peroxide include 2,5-dimethyl-2,5-di (tert-butylperoxy) hexane, 2,5-dimethyl-2,5-di(tert-butylperoxy)hexyne-3, tert-butylperoxybenzoate, dicumyl peroxide, 2,5-dimethyl-2,5-di(benzoylperoxy)hexane, tert-butylcumyl peroxide, diisopropylbenzohydroperoxide, benzoyl peroxide and di-tert-butyl peroxide.

(3) Proportions of Components Incorporated

The percentages of the components (A) and (B) in the composition (I) for use in the present invention are such that the component (A) and the component (B) are 10 to 75% by weight and 90 to 25% by weight, respectively, of the total of the components (A) and (B); preferably 15 to 50% by weight and 85 to 50% by weight, respectively, of the same; particularly 15 to 45% by weight and 85 to 55% by weight, respectively, of the same. When the amount of the component (A) incorporated is more than the above-described range, the resulting molding has excessively high hardness, and thus has an impaired flexible touch. Further, when the amount of the component (A) incorporated is less than the above-described range, the resulting composition has impaired moldability and mechanical strength.

The proportion of the low-molecular weight olefin compound, the component (E), is preferably from 10 to 250 parts by weight, more preferably from 15 to 100 parts by weight for 100 parts by weight of the component (A). When the proportion of the component (E) is higher than the above-described range, the resulting molding shows impaired uniform extensibility upon secondary forming. On the other hand, when the proportion of the component (E) is lower than the above-described range, the resulting molding cannot show sufficiently improved embossing (embossed pattern) retention upon secondary forming.

The proportion of the propylene block copolymer, the component (F), is preferably from 10 to 250 parts by weight, more preferably from 15 to 200 parts by weight for 100 parts by weight of the component (A). When the proportion of the component (F) is higher than the above-described range, the resulting molding shows impaired uniform extensibility upon secondary forming. On the other hand, when the proportion of the component (F) is lower than the above-described range, the resulting molding cannot show sufficiently improved embossing (embossed pattern) retention upon secondary forming.

In the case where the components (E) and (F) are used in combination, the total amount of the components (E) and (F) is preferably 10 to 250 parts by weight, more preferably 15 to 200 parts by weight for 100 parts by weight of the component (A). When the total amount of these two components is in excess of the above-described range, the resulting molding shows impaired uniform extensibility upon secondary forming. On the other hand, when the total amount of the components is less than the above-described range, the resulting molding cannot show sufficiently improved embossing (embossed pattern) retention upon secondary forming.

When the two components are used in combination, it is preferable that the ratio of the component (E) to the component (F) be in the range of 10:90 to 50:50 when improvement in matting is taken into consideration.

The proportion of the softening agent for rubber, the component (G), is preferably 10 to 200 parts by weight, more preferably 15 to 100 parts by weight for 100 parts by weight of the component (B). When the proportion of the component (G) is in excess of this range, it tends to bleed off from the resulting thermoplastic elastomer. On the other hand, when the proportion of the component (G) is lower than the above-described range, the resulting molding may have impaired processability and flexibility.

Further, the proportion of the above-described organic peroxide is generally from 0.01 to 10 parts by weight, preferably from 0.1 to 5 parts by weight for 100 parts by weight of the total of the components (A) and (B), or of the total of the components (A), (B), (E), (F) and (G) when the components (E) and (F) and the softening agent for rubber, the component (G), are further incorporated into the components (A) and (B). However, the proportion of the organic peroxide is practically decided in consideration of the degree of crosslinking.

(4) Dynamic Thermal Treatment (Production of Crosslinked Polymer)

A crosslinked polymer is produced by subjecting the above-described components (A) and (B), and, when necessary, the components (E) and (F), and the softening agent for rubber, the component (G), to a dynamic thermal treatment which is carried out in the presence of the organic peroxide.

The dynamic thermal treatment means that the components in the melted state are kneaded by means of a Banbury mixer, an extruder, a kneader, a mixing roll or the like at a temperature of generally 150 to 350°C, preferably 160 to 300°C for 0.2 to 30 minutes, preferably for 0.5 to 20 minutes.

Crosslinking agent

A crosslinking agent can be used, if necessary, together with the above-described organic peroxide when a crosslinked polymer is produced.

Examples of the crosslinking agent include (meth)acrylate polyfunctional monomers such as ethylene glycol dimethacrylate, polyethylene glycol dimethacrylate, trimethylol propane triacrylate, trimethylol propane trimethacrylate, divinylbenzene and liquid polybutadiene.

The proportion of the crosslinking agent is from 0 to 10 parts by weight, preferably from 0.1 to 5 parts by weight for 100 parts by weight of the total of the above components (A) and (B), or of the total of the components (A), (B), (E), (F) and (G) when the components (E) and (F) and the softening agent for rubber, the component (G), are further added to the components (A) and (B). However, the proportion of the crosslinking agent is practically determined in consideration of the degree of crosslinking.

[II] Crosslinked Polymer (II) (Thermoplastic Elastomer)

The degree of crosslinking (% by weight) of the component (B) crosslinked by the above-described dynamic thermal treatment is obtained in the following manner: 1 gram of the thermoplastic elastomer obtained is placed on a 80 mesh metal gauze, and extracted with boiling xylene by using a Soxhlet extractor for 10 hours; the weight of the solid matter remaining on the metal gauze is divided by the amount of the component (B) contained in 1 gram of the sample, and the resulting value is multiplied by 100.

In the present invention, the degree of crosslinking of the component (B) is preferably from 10 to 99% by weight, more preferably from 15 to 95% by weight, and most preferably from 20 to 90% by weight. When the degree of crosslinking of the component (B) is excessively low, the resulting elastomer has impaired mechanical strength and thermal stability, and provides a sheet which is excessively glossy.

[III] Post Blending

In the present invention, the following component (C) and/or component (D) is further incorporated into the crosslinked polymer (II) (thermoplastic elastomer) produced by the above-described dynamic thermal treatment.

Component (C) : Olefin resin

The component (C) constituting the thermoplastic elastomer composition of the present invention is at least one component selected from the group consisting of the following components (C1) and (C2) :

component (C1): an ethylene copolymer resin having a density of 0.94 g/cm$^3$ or lower, and
component (C2): a crystalline propylene resin.

Component (C1): Ethylene copolymer resin

The ethylene copolymer resin, the above-described component (C1), for use in the present invention has such effects that it decreases the storage shear modulus G' at 190°C, which will be described later, to improve the embossing (embossed pattern) retention of the resulting molding at the time of the secondary forming thereof, and that it decreases the 100% modulus at 100°C to improve the formability at low temperatures. Such an ethylene copolymer resin is, among the previously-mentioned ethylene copolymer resins (component (A2)), one having a density of 0.94 g/cm$^3$ or lower, preferably 0.87 to 0.93 g/cm$^3$, and a crystallinity of generally 62% or lower, preferably 55% or lower as measured by means of X-ray diffractometry. When the ethylene copolymer resin has a density higher than the above-described range, the above effects cannot be attained.
Specifically, low-density polyethylene, or a copolymer of ethylene and 20% by weight or less of another α-olefin such as propylene, butene-1 or hexene-1 is preferably used. The preferable melt flow rate (MFR) of the ethylene copolymer resin as measured in accordance with ASTM-D1238 at 190°C under a load of 2.16 kg is from 0.01 to 100 g/10 min, preferably from 0.1 to 50 g/10 min.
When the ethylene copolymer resin has a melt flow rate (MFR) higher than the above-described range, the resulting molding cannot have good matte finish. On the other hand, when the ethylene copolymer resin has an MFR lower than the above-described range, the resulting elastomer has impaired moldability.
The ethylene copolymer resin can be produced by any known method, and those ones having uniform comonomer distributions and uniform molecular weight distributions, produced by the use of metallocene catalysts are preferred.

Component (C2): Crystalline propylene polymer resin

The crystalline propylene polymer resin, the component (C2), for use in the present invention has such effects that it decreases the storage shear modulus G' at 190°C, which will be described later, to improve the embossing (embossed pattern) retention of the resulting molding at the time of the secondary forming thereof, and that it makes the difference between the storage shear modulus G' at 100°C and that at 140°C small, thereby extending forming the range of forming temperatures.
The previously-mentioned crystalline propylene polymer resin (component (A1)) is preferably used as this crystalline propylene polymer resin.

Component (D): Ethylene-C3-12 α-olefin copolymer rubber

The component (D) for use in the present invention has such an effect that it decreases the 100% modulus at 100°C, which will be described later, to improve the formability at low temperatures.
The component (D) is a copolymer rubber of ethylene and an α-olefin having 3 to 12 carbon atoms; and ethylene-propylene copolymer rubber, ethylene-butene-1 copolymer rubber, ethylene-hexene-1 copolymer rubber or the like, included in the previously-mentioned component (B2) is preferably used.

Blending of Components (C) and (D)

(a) Proportions

The proportions of the components for use in the present invention are suitably determined so that the resulting composition can have the physical property values which will be described later.
The above-described component (C) and/or component (D) can be used either singly or in combination. In the case where these components are used in combination, their total amount is not more than 200 parts by weight, preferably not more than 150 parts by weight for 100 parts by weight of the total of the components (A) and (B).

It is suitable to add the component (C) in an amount of 5 to 200 parts by weight, preferably 5 to 100 parts by weight for 100 parts by weight of the total of the components (A) and (B).

It is suitable to add the component (D) in an amount of 0 to 100 parts by weight, preferably 0 to 80 parts by weight for 100 parts by weight of the total of the components (A) and (B).

When the amount of the component (C) is in excess of the above-described range, the resulting composition has no rubber-like properties (flexibility), while when this amount is less than the above-described range, there is a tendency that the effects of the present invention cannot be fully attained. On the other hand, when the amount of the component (D) is in excess of the above-described range, the resulting composition tends to have impaired mechanical strength.

(b) Method of Addition

There is no particular limitation on the method for adding the components (C) and (D) to the thermoplastic elastomer. The two components can be dry-blended with the thermoplastic elastomer, each being in the form of pellets or powders, when sheet forming is carried out; or they can be kneaded by using a Banbury mixer, an extruder, a kneader blender, a mixing roll or the like.

The kneading is generally conducted at a temperature of 150 to 350°C, preferably at a temperature of 160 to 300°C for 0.2 to 30 minutes, preferably for 0.5 to 20 minutes.

It is noted that the previously-mentioned components (E) and (F) and softening agent for rubber can be added during this process of blending and kneading instead of during the above-described process of dynamic thermal treatment.

[VI] Physical Properties of Thermoplastic Elastomer Composition

The thermoplastic elastomer composition of the present invention has the following physical properties <1> to <4>.

<1> The storage shear modulus G' in dynamic solid viscoelasticity measurement at 100°C is in the range of $3 \times 10^6$ to $2 \times 10^7$ Pa, preferably in the range of $4 \times 10^6$ to $8 \times 10^6$ Pa, and the difference g between the storage shear modulus G' at 100°C and that at 140°C, represented by the following equation (1) is not more than 0.6, preferably not more than 0.5:

$$g = \log G' (100°C) - \log G' (140°C) \tag{1}$$

When the storage shear modulus G' in dynamic solid viscoelasticity measurement at 100°C is in excess of the above-described range, the molding of the elastomer composition cannot be shaped as designed (hereinafter referred to as defective drawing) by secondary forming such as vacuum forming; or the molding has excessively high hardness to give an impaired flexible touch. On the other hand, when the storage shear modulus is lower than the above-described range, the molding of the elastomer composition shows impaired embossing (embossed pattern) retention upon secondary forming.

Further, when the above-described difference g is greater than 0.6, the range of forming temperatures in which the resulting molding can show excellent embossing (embossed pattern) retention and drawing properties upon secondary forming is narrow.

<2> The storage shear modulus G' in dynamic solid viscoelasticity measurement at 190°C is in the range of $1 \times 10^4$ to $1 \times 10^5$ Pa, preferably in the range of $2 \times 10^4$ to $8 \times 10^4$ Pa.

When this storage shear modulus is in excess of the above-described range, the elastomer shows increased residual strain when it is embossed (provided with an embossed pattern), and the set is relaxed upon secondary forming of the embossed molding. The molding thus shows impaired embossing (embossed pattern) retention. On the other hand, when the storage shear modulus is lower than the above-described range, such a trouble may occur during the production of a sheet that the thermoplastic elastomer composition adheres to rollers when it is embossed.

<3> The stress relaxation index r represented by the following equation (2), which is an index for stress relaxation from the stress at a point of $10^{-1}$ seconds to that at a point of $10^3$ seconds after 300% strain has been given at 190°C to the thermoplastic elastomer composition, is 0.35 or more, and preferably from 0.38 to 1.0:

$$r = \{\log G(t) (\text{after } 10^{-1} \text{ seconds}) - \log G'(t) (\text{after } 10^{3} \text{ seconds})\} / 4 \qquad (2)$$

(wherein G(t) represents a relaxation modulus (a value obtained by dividing the shear stress by the strain (3 in this case)).

When the shear relaxation index r is below 0.35, the elastomer shows increased permanent set when it is embossed (provided with an embossed pattern), and the set is relaxed when the embossed molding is subjected to secondary forming. The molding thus shows impaired embossing (embossed pattern) retention. Alternatively, the residual strain may be increased due to deformation caused during the forming process, so that when the molding is adhered, simultaneously with the forming thereof, to a structural material, sufficiently high adhesion strength cannot be obtained.

<4> The 100% modulus at 100°C of a 0.35 mm thick sheet made from the thermoplastic elastomer composition of the present invention is not more than 15 kgf/cm$^2$, preferably not more than 14 kgf/cm$^2$.

When the 100% modulus is in excess of the upper limit, the resulting molding cannot be successfully drawn upon secondary forming such as vacuum forming. Further, when the molding is adhered, simultaneously with the forming thereof, to a structural material, sufficiently high adhesion strength cannot be obtained.

EXAMPLES

The present invention will now be explained more specifically by referring to the following Examples and Comparative Examples.

The raw materials and methods of evaluation herein used are as follows. It is noted that the term "melt flow rate (MFR)" will be hereinafter referred to simply as "MFR".

[I] Raw Materials

(A) Component (A)

(a) Component (A1)

PP① : Propylene block copolymer composed of propylene-ethylene random copolymer block moiety (a) and ethylene-propylene random copolymer block moiety (b), having the following properties:

the MFR (at 230°C under a load of 2.16 kg) according to ASTM-D1238 of the propylene block copolymer itself is 33 g/10 min;
the crystallinity of the propylene block copolymer itself measured by X-ray diffractometry is 50%;
the ethylene content of the propylene block copolymer is 5.8% by weight of the entire copolymer;
the MFR (at 230°C under a load of 2.16 kg) according to ASTM-D1238 of the block moiety (a) is 80 g/10 min;
the propylene content of the block moiety (a) is 98.5% by weight (the ethylene content being 1.5 parts by weight) ;
the block moiety (a) is 89% by weight of the propylene block copolymer; and
the ethylene content of the block moiety (b) is 40% by weight.

PP② : Polypropylene having an MFR (at 230°C under a load of 2.16 kg) according to ASTM-D1238 of 0.7 g/10 min (the crystallinity measured by X-ray diffractometry being 60%).

PP③ : Polypropylene having an MFR (at 230°C under a load of 2.16 kg) according to ASTM-D1238 of 11 g/10 min (the crystallinity measured by X-ray diffractometry being 62%).

(b) Component (A2)

PE① : Ethylene-butene-1 copolymer having a butene-1 content of 8.3% by weight, a density of 0.920 g/cm$^3$, and an MFR (at 190°C under a load of 2.16 kg) according to ASTM-D1238 of 16 g/10 min (the crystallinity measured by X-ray diffractometry being 48%).

(B) Component (B)

(a) Component (B1)

EPM① : Propylene-ethylene copolymer rubber having a Mooney viscosity $ML_{1+4}(100°C)$ according to ASTM-D1646 of 70, and a propylene content of 70% by weight (the crystallinity measured by X-ray diffractometry being not higher than 5%).

(b) Component (B2)

EPM② : Ethylene-propylene copolymer rubber having a Mooney viscosity $ML_{1+4}(100°C)$ according to ASTM-D1646 of 70, and a propylene content of 27% by weight (the crystallinity measured by X-ray diffractometry being not higher than 5%).

EPM③ : Ethylene-propylene copolymer rubber having a Mooney viscosity $ML_{1+4}$ $(100°C)$ according to ASTM-D1646 of 27, and a propylene content of 27% by weight (the crystallinity measured by X-ray diffractometry being not higher than 5%).

EPDM① : Ethylene-propylene-5-ethylidene-2-norbornene terpolymer rubber containing 43% by weight of paraffin oil (the component (E) mentioned below), having a Mooney viscosity $ML_{1+4}(120°C)$ according to ASTM-D1646 of 62 (corresponding to 86 when converted into $ML_{1+4}(100°C)$), a propylene content of 28% by weight of the total amount of ethylene and propylene, and an iodine value of 15 (the crystallinity measured by X-ray diffractometry being not higher than 5%).

EPDM② : Ethylene-propylene-5-ethylidene-2-norbornene terpolymer rubber having a Mooney viscosity $ML_{1+4}$ $(100°C)$ according to ASTM-D1646 of 150, a propylene content of 36% by weight of the total amount of ethylene and propylene, and an iodine value of 15 (the crystallinity measured by X-ray diffractometry being not higher than 5%).

(C) Component (C)

(a) Component (C1)

PE② : Ethylene-hexene-1 copolymer produced by the use of a metallocene catalyst, having a hexene-1 content of 18.5% by weight, a density of 0.895 g/cm$^3$, and an MFR (at 190°C under a load of 2.16 kg) according to ASTM-D1238 of 2 g/10 min, the melting peak temperature of its crystals measured by the DSC method being 90°C, and the temperature at which the melting is completed being 100°C (the crystallinity measured by X-ray diffractometry being 30%).

PE③ : Ethylene-butene-1 copolymer having a butene-1 content of 6.8% by weight, a density of 0.920 g/cm$^3$, and an MFR (at 190°C under a load of 2.16 kg) according to ASTM-D1238 of 2 g/10 min (the crystallinity measured by X-ray diffractometry being 48%).

(b) Component (C2)

PP④ : Propylene block copolymer composed of propylene homopolymer block moiety (a) and ethylene-propylene random copolymer block moiety (b), having the following properties:

the MFR (at 230°C under a load of 2.16 kg) according to ASTM-D1238 of the propylene block copolymer itself is 1.2 g/10 min;

the crystallinity of the propylene block copolymer itself measured by X-ray diffractometry is 44%;

the ethylene content of the propylene block copolymer is 16% by weight of the entire copolymer;

the MFR (at 230°C under a load of 2.16 kg) according to ASTM-D1238 of the block moiety (a) is 10 g/10 min;
the block moiety (a) is 74% by weight of the propylene block copolymer; and
the ethylene content of the block moiety (b) is 60% by weight.

PP⑤ : Propylene-ethylene random copolymer having an ethylene content of 5.5% by weight, an MFR (at 230°C under a load of 2.16 kg) according to ASTM-D1238 of 2 g/10 min, and a crystallinity measured by X-ray diffractometry of 57%.

(D) Component (D)

EPDM③ : Ethylene-propylene copolymer rubber having a Mooney viscosity $ML_{1+4}$(100°C) according to ASTM-D1646 of 27, and a propylene content of 27% by weight (the crystallinity measured by X-ray diffractometry being not higher than 5%).

(E) Component (E)

PP⑥ : Low-molecular weight propylene compound having an MFR (at 230°C under a load of 2.16 kg) according to ASTM-D1238 of approximately 4,700 (number-average molecular weight 15,000), and a crystallinity measured by X-ray diffractometry of 58.5 %, the melting peak temperature of its crystals measured by the DSC method being 147°C.

(F) Component (F)

PP⑦ : Propylene block copolymer composed of propylene homopolymer block moiety (a) and ethylene-propylene random copolymer block moiety (b), having the following properties:

the MFR (at 230°C under a load of 2.16 kg) according to ASTM-D1238 of the propylene block copolymer itself is 60 g/10 min;
the crystallinity of the propylene block copolymer itself measured by X-ray diffractometry is 56%;
the ethylene content of the propylene block copolymer is 6% by weight of the entire copolymer;
the MFR (at 230°C under a load of 2.16 kg) according to ASTM-D1238 of the block moiety (a) is 150 g/10 min;
the block moiety (a) is 90% by weight of the propylene block copolymer; and
the ethylene content of the block moiety (b) is 40% by weight.

(G) Component (G)

Softening agent for rubber:

Paraffin oil having a number-average molecular weight of 746, which is found, as a result of a ring analysis, to have no ring structure ("Diana Process Oil PW380" manufactured by Idemitsu Kosan Co., Ltd.).

(H) Crosslinking Agent

Crosslinking agent:

Divinylbenzene manufactured by Sankyo Chemical Industries, Ltd.

(I) Organic Peroxide

Organic peroxide:

"Kayahexa AD" (2,5-dimethyl-2,5-di(tert-butylperoxy)hexane) manufactured by Kayaku AKZO Corporation.

[II] Methods of Evaluation

(1) Solid Viscoelasticity

The storage shear modulus G' at 100°C, 140°C and 190°C were determined by using a Mechanical Spectrometer Model RMS 605 manufactured by Rheometric Scientific FE Co., Ltd.

Temperature range: 0 - 200°C
Strain: 0.1% at a temperature ranging from 0 to 150°C, and 1.5% at a temperature ranging from 150 to 200°C
Frequency: 6.28 rad/sec
Specimen: Obtained by compression-molding pellets of the thermoplastic elastomer composition at a temperature of 200°C under a pressure of 100 kg/cm$^2$ into a sheet having a thickness of 2 mm,
and cutting the sheet into square sections with the dimensions of 63 mm x 12.7 mm.

(2) Stress Relaxation Index

The time dependence of the relaxation modulus G(t) was determined by using a Mechanical Spectrometer Model RMS 800 manufactured by Rheometric Scientific FE Co., Ltd., and the stress relaxation index r was calculated by the following equation:

$$r = \{\log G(t) \ (after \ 10^{-1} \ seconds) - \log G'(t) \ (after \ 10^{3} \ seconds)\} / 4 \qquad (2)$$

(wherein G(t) represents a relaxation modulus (a value obtained by dividing the shear stress by the strain (3 in this case)).

Temperature: 190°C
Strain: 300% in a clockwise direction
Fixture: Cone plate having a diameter of 25 mm and a cone angle of 0.1 radian
Gap: 0.05 mm
Specimen: Obtained by compression-molding pellets of the thermoplastic elastomer composition at a temperature of 200°C under a pressure of 100 kg/cm$^2$ into a sheet having a thickness of 1 mm.

(3) Tensile Modulus

A sheet having a thickness of 0.35 mm extruded from a T-die molding machine was cut, in the direction rectangular to the direction of extrusion, into strips, each having a width of 30 mm and a length of 140 mm. A tensile test was carried out by using these strips and a tensile tester, Autograph Model IS2000 manufactured by Shimadzu Corp., in a constant temperature chamber, the span being 80 mm and the stress rate being 500 mm/min. The 100% modulus was obtained by calculation, by dividing the stress at 100% strain by the sectional area of the specimen.

(4) Physical Properties of Sheet

(A) Embossing (Embossed Pattern) Retention After Vacuum Forming (Rz Retention)

The embossing (embossed pattern) retention was determined in the following manner: after a sheet is subjected to vacuum forming, the depth of the embossed pattern on the part of the sheet corresponding to the top face of the truncated quadrangular pyramid is measured with a "Surface Roughness Meter Surfcom 570A" manufactured by Tokyo Seimitsu Co., Ltd., and indicated by the 10 point average surface roughness; and the embossing retention is obtained as the Rz retention (%) which is the percentage of the above-obtained 10 point average surface roughness to the 10 point average surface roughness at the same part of the sheet before subjected to the vacuum forming. In Table 2, O means that the Rz retention is 40% or higher; and X means that the Rz retention is lower than 40%.

(B) Drawing

The drawing is indicated by O when the curve of the upstand at the underside of the truncated quadrangular pyramid (angle: 90 degrees, metal mold with a corner curve of 0.5 mm as measured by a curve ruler (JIS-Z8114)) formed by the vacuum forming which will be described later is 2.0 mm or smaller, and by X when the curve is greater than 2.0 mm.

(C) Rupture

The rupture is indicated by O when no rupture was found at all during the vacuum forming which will be described later, and by X when rupture was found during the same.

(D) Adhesion

In the vacuum forming which will be described later, after an isoprene adhesive was spray-coated onto the surface of a wood stock which had the same shape as that of the metal mold, the PP foam-laminated sheet mentioned below was subjected to vacuum forming. The adhesion is indicated by O when no peeling (between the PP foam and the wood stock) was found at all at the upstand part at the underside of the truncated quadrangular pyramid, and by X when peeling was found at this part.

[III] Examples & Comparative Examples

Referential Examples 1 to 6 (Production of Thermoplastic Elastomers)

1st Step

The components (except the organic peroxide and the organic crosslinking agent) in the amounts shown in Table 1 were placed in a 4 liter Banbury mixer, and kneaded at a temperature of 170°C for 5 minutes. Thereafter, the mixture was sheeted by rolls, and the sheet was cut into pellets by a sheet cutter.

2nd Step

The organic peroxide, and divinylbenzene, the organic crosslinking agent, in the amounts shown in Table 1 were mixed, by using a Henschel mixer, with the pellets obtained in the 1st step, and the mixture was then kneaded by using a twin-screw extruder (PCM 45 manufactured by Ikegai Corp., 200°C, 230 rpm) for 40 seconds, thereby obtaining a thermoplastic elastomer.

Table 1

| | Ref. Example 1 | Ref. Example 2 | Ref. Example 3 | Ref. Example 4 | Ref. Example 5 | Ref. Example 6 |
|---|---|---|---|---|---|---|
| Component (A1)    PP① | - | 32 | 16 | 24 | 36 | - |
| PP② | 27 | - | - | - | - | - |
| PP③ | - | - | - | - | - | 20 |
| Component (A2) | - | - | - | 12 | - | - |
| Component (B1)    EPM① | 36 | 54 | 48 | 36 | - | 30 |
| Component (B1)    EPM② | - | - | - | - | 36 | - |
| EPM③ | - | 5 | - | - | - | - |
| EPDM① | 28 | 9 | 36 | 28 | 28 | - |
| EPDM② | - | - | - | - | - | 50 |
| Component (E)    PP⑥*1 | 50 | - | - | - | - | - |
| Component (E)    PP⑦*1 | - | - | 200 | - | - | - |
| Component (G) | (32) | (10) | (32) | (32) | (32) | - |
| Crosslinking Agent*2 | 0.4 | 0.4 | 0.4 | 0.4 | 0.4 | 0.5 |
| Organic Peroxide*2 | 0.3 | 0.3 | 0.3 | 0.3 | 0.3 | 0.3 |

Regarding the component (G), (   ) means that this component has been added to EPDM① in advance.
*1:   the value (part by weight) for 100 parts by weight of the component (A)
*2:   the value (parts by weight) for 100 parts by weight of the total of the components (A), (B), (E) and (G).

EP 0 872 517 B1

Examples 1 to 7 & Comparative Examples 1 to 7

3rd Step

The pellets obtained in the 2nd step were mixed with the components in amounts shown in Tables 2 to 5 by using a Henschel mixer, and the mixture was then kneaded by using a twin-screw extruder (PCM 45 manufactured by Ikegai Corp.) at 230 rpm at a temperature of 200°C for 40 seconds, thereby obtaining a thermoplastic elastomer composition.

Production of Single-Layer Sheet

The thus-obtained thermoplastic elastomer composition was extruded at a temperature of 220°C while allowing it to pass between an embossing (embossing-pattern processing) roll (30°C) and a pressure rubber roller, using an extruder having a screw diameter of 45 mm and a compression ratio L/D of 28 ("45 mmø T-die small molding machine" manufactured by Musashino Kikai Co., Ltd.), equipped with a coathanger T die and a full flighted screw. The sheet was taken off at a rate of 2 m/min, thereby obtaining an embossed sheet (a sheet provided with an embossed pattern) having a thickness of 0.35 mm, the average depth of the embossing pattern being 100 micrometers.
This sheet was further subjected to a corona discharge treatment, and a primer ("Hicorp AD-180 series" manufactured by Tokushu Shikiryo Coloring Mfg. Co., Ltd., solid content 6% by weight), and a primer ("Hicorp UEU-684 series" manufactured by Tokushu Shikiryo Coloring Mfg. Co., Ltd., solid content 7% by weight) were spray-coated onto the sheet in amounts of 40 $g/m^2$ and 70 $g/m^2$ (wet basis), respectively.
The sheet thus obtained were evaluated in terms of embossing, drawing and rupture.

Production of Sheet Laminated with Polypropylene Resin Foam

In the above-described production of a single-layer sheet, when the thermoplastic elastomer was extruded while allowing it to pass between an embossing (embossing-pattern processing) roll (30°C) and a pressure rubber roller, a polypropylene resin foam sheet (PPAM 25020 manufactured by Toray Industries, Inc.) was also allowed to pass between the above thermoplastic elastomer sheet and the pressure rubber roller. Thus, the thermoplastic elastomer composition was laminated onto the polypropylene resin foam sheet.
The above-obtained sheet was subjected to the evaluation of adhesion.

Vacuum Forming

The single-layer sheet obtained above was heated by means of an infrared heater until the surface temperature of the sheet reached 100°C - 130°C. Thereafter, this sheet was subjected to drape vacuum forming by using a male die in the shape of a truncated quadrangular pyramid having an underside area of 130 $cm^2$, a top face area of 40 $cm^2$, and a height of 5.5 cm (molding machine: "Vacuum Forming Machine FCP-4APA-W-30-L" manufactured by Asano Kenkyu-sho K.K.).
In order to evaluate lifting, the PP-foam-laminated sheet was subjected to vacuum-forming in the same manner as described above, by using a metal mold covered with a wood stock (curve at the corner: 5-mmR) which had been spray-coated with an isoprene rubber adhesive in advance, followed by drying at a temperature of 80°C for 3 minutes.

Table 2

| | | | | Example 1 | Example 2 | Example 3 | Example 4 |
|---|---|---|---|---|---|---|---|
| Formulation | Thermoplastic elastomer 1 | | Wt.% | – | – | – | – |
| | Thermoplastic elastomer 2 | | | 65 | 70 | 70 | 70 |
| | Thermoplastic elastomer 3 | | | – | – | – | – |
| | Thermoplastic elastomer 4 | | | – | – | – | – |
| | Thermoplastic elastomer 5 | | | – | – | – | – |
| | Thermoplastic elastomer 6 | | | – | – | – | – |
| | Component(C2) PP④ | | Wt.% | 10 | 10 | 10 | 10 |
| | Component(C2) PP③ | | | – | – | – | – |
| | Component(C2) PP⑤ | | | – | – | – | – |
| | Component(C1) PE③ | | | – | 10 | – | – |
| | Component(C1) PE② | | | 20 | – | 10 | 20 |
| | Component(D) EPM③ | | | 5 | 10 | 10 | – |
| Solid Viscoelasticity | | G' 100°C | ×$10^6$ | 5 | 6.6 | 4.6 | 4.4 |
| | | G' 140°C | ×$10^6$ | 1.9 | 2.1 | 2 | 2 |
| | | ΔG' | – | 0.42 | 0.497 | 0.36 | 0.34 |
| | | G' 190°C | ×$10^4$ | 5 | 6.2 | 7 | 6.7 |
| Tensile Modulus (100°C, 100%) | | | kgf/$cm^2$ | 10.7 | 13.1 | 11.1 | 11 |
| Stress relaxation index r | | | – | 0.86 | 0.75 | 0.68 | 0.69 |
| Evaluation | Embossing | | 100°C | ○ | ○ | ○ | ○ |
| | | | 110°C | ○ | ○ | ○ | ○ |
| | | | 120°C | ○ | ○ | ○ | ○ |
| | Drawing | | 100°C | ○ | ○ | ○ | ○ |
| | | | 110°C | ○ | ○ | ○ | ○ |
| | | | 120°C | ○ | ○ | ○ | ○ |
| | Lifting | | 100°C | ○ | ○ | ○ | ○ |
| | | | 110°C | ○ | ○ | ○ | ○ |
| | | | 120°C | ○ | ○ | ○ | ○ |
| | Rupture | | 100°C | ○ | ○ | ○ | ○ |
| | | | 110°C | ○ | ○ | ○ | ○ |
| | | | 120°C | ○ | ○ | ○ | ○ |

## Table 3

| | | | Example 5 | Example 6 | Example 7 |
|---|---|---|---|---|---|
| Formulation | Thermoplastic elastomer 1 | Wt.% | 75 | – | – |
| | Thermoplastic elastomer 2 | | – | – | – |
| | Thermoplastic elastomer 3 | | – | 70 | – |
| | Thermoplastic elastomer 4 | | – | – | 75 |
| | Thermoplastic elastomer 5 | | – | – | – |
| | Thermoplastic elastomer 6 | | – | – | – |
| | Component(C2) PP④ | Wt.% | 5 | 5 | 10 |
| | Component(C2) PP③ | | – | – | – |
| | Component(C2) PP⑤ | | – | – | – |
| | Component(C1) PE③ | | – | – | – |
| | Component(C1) PE② | | 20 | 20 | 15 |
| | Component(D) EPM③ | | – | 5 | – |
| Solid Viscoelasticity | G' 100°C | ×10$^6$ | 4.5 | 4.7 | 4.2 |
| | G' 140°C | ×10$^6$ | 2.1 | 2.1 | 1.8 |
| | ΔG' | – | 0.32 | 0.34 | 0.5 |
| | G' 190°C | ×10$^4$ | 7 | 7 | 9.3 |
| Tensile Modulus (100°C, 100%) | | kgf/cm$^2$ | 13.2 | 13.4 | 12.1 |
| Stress relaxation index r | | – | 0.7 | 0.7 | 0.49 |
| Evaluation | Embossing | 100°C | ○ | ○ | ○ |
| | | 110°C | ○ | ○ | ○ |
| | | 120°C | ○ | ○ | ○ |
| | Drawing | 100°C | ○ | ○ | ○ |
| | | 110°C | ○ | ○ | ○ |
| | | 120°C | ○ | ○ | ○ |
| | Lifting | 100°C | ○ | ○ | ○ |
| | | 110°C | ○ | ○ | ○ |
| | | 120°C | ○ | ○ | ○ |
| | Rupture | 100°C | ○ | ○ | ○ |
| | | 110°C | ○ | ○ | ○ |
| | | 120°C | ○ | ○ | ○ |

EP 0 872 517 B1

19

Table 4

| | | | Comp. Example 1 | Comp. Example 2 | Comp. Example 3 | Comp. Example 4 |
|---|---|---|---|---|---|---|
| Formulation | Thermoplastic elastomer 1 | Wt.% | – | – | – | – |
| | Thermoplastic elastomer 2 | | – | – | 60 | 70 |
| | Thermoplastic elastomer 3 | | – | – | – | – |
| | Thermoplastic elastomer 4 | | – | – | – | – |
| | Thermoplastic elastomer 5 | | 70 | – | – | – |
| | Thermoplastic elastomer 6 | | – | 100 | – | – |
| | Component(C2) PP④ | Wt.% | 10 | – | 10 | – |
| | Component(C2) PP③ | | – | – | – | 10 |
| | Component(C2) PP⑤ | | – | – | – | – |
| | Component(C1) PE③ | | – | 20 | – | 15 |
| | Component(C1) PE② | | – | – | 10 | – |
| | Component(D) EPM③ | | – | – | 20 | 5 |
| Solid Viscoelasticity | G' 100°C | ×10$^6$ | 6.9 | 6 | 2.7 | 7.2 |
| | G' 140°C | ×10$^6$ | 2.2 | 2.1 | 1 | 2.2 |
| | ΔG' | – | 0.5 | 0.46 | 0.43 | 0.52 |
| | G' 190°C | ×10$^4$ | 7.1 | 13 | 5.5 | 5 |
| Tensile Modulus (100°C, 100%) | | kgf/cm$^2$ | 15.3 | 12.8 | 8.3 | 16.3 |
| Stress relaxation index r | | – | 0.7 | 0.34 | 0.5 | 0.72 |
| Evaluation | Embossing | 100°C | ○ | ○ | ○ | ○ |
| | | 110°C | ○ | ○ | × | ○ |
| | | 120°C | × | × | × | ○ |
| | Drawing | 100°C | × | × | ○ | × |
| | | 110°C | ○ | ○ | ○ | × |
| | | 120°C | ○ | ○ | ○ | ○ |
| | Lifting | 100°C | × | × | ○ | × |
| | | 110°C | ○ | ○ | ○ | × |
| | | 120°C | ○ | ○ | ○ | ○ |
| | Rupture | 100°C | × | ○ | ○ | ○ |
| | | 110°C | × | ○ | ○ | ○ |
| | | 120°C | ○ | ○ | ○ | ○ |

EP 0 872 517 B1

Table 5

| | | | Comp. Example 5 | Comp. Example 6 | Comp. Example 7 |
|---|---|---|---|---|---|
| Formulation | Thermoplastic elastomer 1 | Wt.% | — | — | — |
| | Thermoplastic elastomer 2 | | — | — | — |
| | Thermoplastic elastomer 3 | | 75 | 70 | 70 |
| | Thermoplastic elastomer 4 | | — | — | — |
| | Thermoplastic elastomer 5 | | — | — | — |
| | Thermoplastic elastomer 6 | | — | — | — |
| | Component(C2) PP④ | Wt.% | — | — | — |
| | Component(C2) PP③ | | 5 | — | 10 |
| | Component(C2) PP⑤ | | — | — | 10 |
| | Component(C1) PE③ | | — | — | 10 |
| | Component(C1) PE② | | 20 | 30 | — |
| | Component(D) EPM③ | | — | — | — |
| Solid Viscoelasticity | G' 100°C | ×10$^6$ | 6.2 | 6 | 4.5 |
| | G' 140°C | ×10$^6$ | 1.4 | 0.8 | 1.1 |
| | ΔG' | — | 0.66 | 0.88 | 0.61 |
| | G' 190°C | ×10$^4$ | 5 | 3.6 | 4.4 |
| Tensile Modulus (100°C, 100%) | | kgf/cm$^2$ | 13.3 | 13.6 | 12.5 |
| Stress relaxation index r | | — | 0.72 | 0.8 | 0.85 |
| Evaluation | Embossing | 100°C 110°C 120°C | ○○× | ○×× | ○○× |
| | Drawing | 100°C 110°C 120°C | ×○○ | ×○○ | ×○○ |
| | Lifting | 100°C 110°C 120°C | ×○○ | ×○○ | ×○○ |
| | Rupture | 100°C 110°C 120°C | ○○○ | ○○○ | ○○○ |

INDUSTRIAL APPLICABILITY

Molded sheets of the thermoplastic elastomer composition of the present invention, when subjected to secondary forming such as vacuum forming, pressure forming or the like, show excellent uniform extensibility and embossing retention over a wide range of forming temperatures. The thermoplastic elastomer composition of the present invention is thus suitable for the skin materials of automotive trims, for example, instrument panels, door trims, console boxes, ceiling sheets and handle pads, and for leather sheets for chairs and bags.

**Claims**

1.   A thermoplastic elastomer composition comprising a crosslinked polymer (II) obtained by subjecting a composition (I) comprising 10 to 75% by weight of the following component (A) and 90 to 25% by weight of the following component (B) to a dynamic thermal treatment which is carried out in the presence of an organic peroxide, and at least one component selected from the following components (C) and (D) in an amount of not more than 200 parts by weight for 100 parts by weight of the total of the components (A) and (B), the thermoplastic elastomer composition having the following physical properties <1> to <4>:

component (A): a resin composed of the following components (A1) and (A2):

component (A1): 50 to 100% by weight of a crystalline propylene polymer resin, and
component (A2): 50 to 0% by weight of an olefin resin other than component (A1);

component (B): an elastomer composed of the following components (B1) and (B2):

component (B1): 10 to 100% by weight of a propylene-olefin copolymer rubber having a propylene content of 65 to 90% by weight, and
component (B2): 90 to 0% by weight of an olefin copolymer rubber other than component (B1);

component (C): 5 to 200% by weight of at least one of the following components (C1) and (C2):

component (C1): an ethylene copolymer resin having a density of 0.94 $g/cm^3$ or lower, and
component (C2): a crystalline propylene polymer resin; and

component (D): 0 to 100% by weight of a copolymer rubber of ethylene and an $\alpha$-olefin having 3 to 12 carbon atoms;
physical properties

<1> the storage shear modulus G' in dynamic solid viscoelasticity measurement at 100°C is in the range of $3 \times 10^6$ to $2 \times 10^7$ Pa, and the difference g between the storage shear modulus G' at 100°C and that at 140°C, represented by the following equation (1) is not more than 0.6:

$$g = \log G' \, (100°C) - \log G' \, (140°C) \tag{1};$$

<2> the storage shear modulus G' in dynamic solid viscoelasticity measurement at 190°C is in the range of $1 \times 10^4$ to $1 \times 10^5$ Pa;
<3> the stress relaxation index r represented by the following equation (2), which is an index for stress relaxation from the stress at a point of $10^{-1}$ seconds to the stress at a point of $10^3$ seconds after 300% strain has been given at 190°C, is 0.38 or more:

$$r = \{\log G(t) \, (\text{after } 10^{-1} \text{ seconds}) - \log G'(t) \, (\text{after } 10^3 \text{ seconds})\} / 4 \tag{2}$$

(wherein G(t) represents a relaxation modulus); and
<4> the 100% modulus at 100°C of a 0.35 mm thick sheet is not more than 15 $kgf/cm^2$.

2. The thermoplastic elastomer composition according to claim 1, wherein the component (A1) has a crystallinity of 40 to 80% as measured by X-ray diffractometry, and a melt flow rate (at 230°C under a load of 2.16 kg) of 0.1 to 80 g/10 min.

3. The thermoplastic elastomer composition according to claim 1 or 2, wherein the component (A2) is an ethylene polymer resin having a density of 0.88 to 0.97 $g/cm^3$.

4. The thermoplastic elastomer composition according to any of claims 1 to 3, wherein the component (B1) is propylene-ethylene copolymer rubber having a Mooney viscosity $ML_{1+4}$(100°C) of 10 to 200.

5. The thermoplastic elastomer composition according to any of claims 1 to 4, wherein the component (B2) is ethylene-propylene copolymer rubber or ethylene-propylene-unconjugated diene terpolymer rubber having a propylene content of 15 to 60% by weight of the total amount of ethylene and propylene.

6. The thermoplastic elastomer composition according to any of claims 1 to 5, wherein the composition (I) further comprises at least one component selected from the following components (E) and (F) in an amount of 10 to 250 parts by weight for 100 parts by weight of the component (A) :

component (E): a low-molecular weight olefin compound having a melt flow rate of 100 g/10 min or more as measured in accordance with ASTM-D1238 at 230°C under a load of 2.16 kg, and a melting point of 80°C or higher; and

component (F): a propylene block copolymer composed of the following block moieties (a) and (b):

block moiety (a): a block moiety having a propylene content of 90 to 100% by weight, and a melt flow rate at 230°C under a load of 2.16 kg of 50 g/10 min or higher, selected from the following (a1), (a2) and (a3):

(a1): propylene homopolymer block moiety,
(a2): a binary random copolymer block moiety consisting of propylene and ethylene or an α-olefin having 4 to 12 carbon atoms, and
(a3): a moiety containing propylene homopolymer block moiety and a binary random copolymer block moiety consisting of propylene and ethylene or an α-olefin having 4 to 12 carbon atoms; and

block moiety (b): a block moiety having an ethylene content of 20 to 100% by weight, selected from the following (b1), (b2) and (b3):

(b1): ethylene homopolymer block moiety,
(b2): a binary random copolymer block moiety consisting of ethylene and an α-olefin having 3 to 12 carbon atoms, and
(b3): a moiety containing ethylene homopolymer block moiety and a binary random copolymer block moiety consisting of ethylene and an α-olefin having 3 to 12 carbon atoms.

7. The thermoplastic elastomer composition according to claim 6, wherein the component (E) is propylene homopolymer, or a random copolymer of propylene and 10% by weight or less of at least one α-olefin selected from ethylene, butene-1 and hexene-1.

8. The thermoplastic elastomer composition according to claim 6 or 7, wherein the amount of the α-olefin other than propylene, contained in the propylene block copolymer, the component (F), is not more than 30% by weight of the block copolymer, and the percentage of the block moiety (a) in the copolymer is 70 to 95% by weight.

**Patentansprüche**

1. Thermoplastische Elastomerzusammensetzung, enthaltend ein vernetztes Polymeres (II), das erhalten worden ist durch Durchführen einer dynamischen thermischen Behandlung an einer Zusammensetzung (I), die 10 bis 75 Gew.-% der nachstehenden Komponente (A) und 90 bis 25 Gew.-% der nachstehenden Komponente (B) enthält, wobei die dynamische thermische Behandlung in Gegenwart eines organischen Peroxids durchgeführt wird, und mindestens eine Komponente, die unter den nachstehenden Komponenten (C) und (D) ausgewählt ist, in einer Menge von nicht mehr als 200 Gewichtsteilen pro 100 Gewichtsteile der Gesamtmenge der Komponenten (A) und (B), wobei die thermoplastische Elastomerzusammensetzung die folgenden physikalischen Eigenschaften <1> bis <4> aufweist:

Komponente (A): ein aus den folgenden·Komponenten (A1) und (A2) zusammengesetztes Harz:

Komponente (A1): 50 bis 100 Gew.-% eines kristallinen Propylen-Polymerharzes und
Komponente (A2): 50 bis 0 Gew.-% eines von der Komponente (A1) abweichenden Olefinharzes;

Komponente (B): ein aus den folgenden Komponenten (B1) und (B2) zusammengesetztes Elastomeres:

Komponente (B1): 10 bis 100 Gew.-% eines Propylen-Olefin-Copolymerkautschuks mit einem Propylengehalt von 65 bis 90 Gew.-% und
Komponente (B2): 90 bis 0 Gew.-% eines von der Komponente (B1) abweichenden Olefin-Copolymerkautschuks;

Komponente (C): 5 bis 200 Gew.-% mindestens einer der folgenden Komponenten (C1) und (C2):

Komponente (C1): ein Ethylen-Copolymerharz mit einer Dichte von 0,94 g/cm3 oder weniger und
Komponente (C2) : ein kristallines Propylen-Polymerharz; und
Komponente (D): 0 bis 100 Gew.-% eines Copolymerkautschuks aus Ethylen und einem α-Olefin mit 3 bis 12 Kohlenstoffatomen;

physikalische Eigenschaften:

<1> der Speicherschermodul G' bei der Messung der dynamischen festen Viskoelastizität bei 100°C liegt im Bereich von $3 \times 10^6$ bis $2 \times 10^7$ Pa und die Differenz g zwischen dem Speicherschermodul G' bei 100°C und bei 140°C gemäß folgender Gleichung (1) beträgt nicht mehr als 0,6:

$$g = \log G' (100°C) - \log G' (140°C) \tag{1}$$

<2> der Speicherschermodul G' bei der Messung der dynamischen festen Viskoelastizität bei 190°C liegt im Bereich von $1 \times 10^4$ bis $1 \times 10^5$ Pa;
<3> der Spannungsrelaxationsindex r gemäß der folgenden Gleichung (2), bei dem es sich um einen Index für die Spannungsrelaxation von der Spannung bei einem Punkt von $10^{-1}$ Sekunden bis zur Spannung bei einem Punkt von $10^3$ Sekunden nach Ausüben von 300% Spannung bei 190°C handelt, beträgt 0,38 oder mehr:

$$r = \{\log G(t) \text{ (nach } 10^{-1} \text{ Sekunden) - } \log G'(t) \text{ (nach } 10^3 \text{ Sekunden)}\}/4 \tag{2}$$

(wobei G(t) den Relaxationsmodul bedeutet); und
<4> der 100%-Modul bei 100°C einer 0,35 mm dicken Folie beträgt nicht mehr als 15 kp/cm$^2$.

2. Thermoplastische Elastomerzusammensetzung nach Anspruch 1, wobei die Komponente (A1) eine durch Röntgenbeugung gemessene Kristallinität von 40 bis 80%, eine Schmelzflussrate (bei 230°C unter einer Last von 2,16 kg) von 0,1 bis 80 g/10 min aufweist.

3. Thermoplastische Elastomerzusammensetzung nach Anspruch 1 oder 2, wobei es sich bei der Komponente (A2) um ein Ethylen-Polymerharz mit einer Dichte von 0,88 bis 0,97 g/cm$^3$ handelt.

4. Thermoplastische Elastomerzusammensetzung nach einem der Ansprüche 1 bis 3, wobei es sich bei der Komponente (B1) um einen Propylen-Ethylen-Copolymerkautschuk mit einer Mooney-Viskosität $ML_{1+4}$(100°C) von 10 bis 200 handelt.

5. Thermoplastische Elastomerzusammensetzung nach einem der Ansprüche 1 bis 4, wobei es sich bei der Komponente (B2) um einen Ethylen-Propylen-Copolymerkautschuk oder einen Ethylen-Propylen-unkonjugiertes Dien-Terpolymerkautschuk mit einem Propylengehalt von 15 bis 60 Gew.-%, bezogen auf die Gesamtmenge aus Ethylen und Propylen, handelt.

6. Thermoplastische Elastomerzusammensetzung nach einem der Ansprüche 1 bis 5, wobei die Zusammensetzung (I) zusätzlich mindestens eine unter den folgenden Komponenten (E) und (F) ausgewählte Komponente in einer Menge von 10 bis 250 Gewichtsteilen pro 100 Gewichtsteile der Komponente (A) enthält:

Komponente (E): eine niedermolekulare Olefinverbindung mit einer Schmelzflussrate von 100 g/10 min oder mehr, gemessen gemäß ASTM-D1238 bei 230°C unter einer Last von 2,16 kg und einem Schmelzpunkt von 80°C oder mehr; und
Komponente (F): ein Propylen-Blockcopolymeres, zusammengesetzt aus den folgenden Blockresten (a) und (b):

Blockrest (a) : ein Blockrest mit einem Propylengehalt von 90 bis 100 Gew.-% und einer Schmelzflussrate von 230°C unter einer Last von 2,16 kg von 50 g/10 min oder mehr, ausgewählt unter den folgenden Bestandteilen (a1), (a2) und (a3) :

(a1) : ein Propylen-Homopolymer-Blockrest,
(a2): ein binärer, statistischer Copolymer-Blockrest, bestehend aus Propylen und Ethylen oder einem α-Olefin mit 4 bis 12 Kohlenstoffatomen und
(a3): ein Rest, der einen Propylen-Homopolymer-Blockrest und einen binären, statistischen Copolymer-Blockrest, bestehend aus Propylen und Ethylen oder einem α-Olefin mit 4 bis 12 Kohlenstoffatomen, enthält; und

Blockrest (b) : ein Blockrest mit einem Ethylengehalt von 20 bis 100 Gew.-%, ausgewählt unter den folgenden Bestandteilen (b1), (b2) und (b3):

(b1) : ein Ethylen-Homopolymer-Blockrest,
(b2): ein binärer, statistischer Copolymer-Blockrest, bestehend aus Ethylen und einem α-Olefin mit 3 bis 12 Kohlenstoffatomen, und
(b3): ein Rest, enthaltend einen Ethylen-Homopolymer-Blockrest und einen binären, statistischen Copolymer-Blockrest, bestehend aus Ethylen und einem α-Olefin mit 3 bis 12 Kohlenstoffatomen.

**7.** Thermoplastische Elastomerzusammensetzung nach Anspruch 6, wobei es sich bei der Komponente (E) um ein Propylen-Homopolymeres oder ein statistisches Copolymeres aus Propylen und 10 Gew.-% oder weniger mindestens eines α-Olefins, ausgewählt unter Ethylen, Buten-1 und Hexen-1, handelt.

**8.** Thermoplastische Elastomerzusammensetzung nach Anspruch 6 oder 7, wobei die Menge des im Propylen-Blockcopolymeren der Komponente (F) enthaltenen, von Propylen abweichenden α-Olefins nicht mehr als 30 Gew.-% des Blockcopolymeren beträgt und der prozentuale Anteil des Blockrestes (a) im Copolymeren 70 bis 95 Gew.-% beträgt.


**Revendications**

**1.** Composition élastomère thermoplastique contenant un polymère réticulé (II), obtenu en soumettant une composition (I) comprenant de 10 à 75 % en poids du composant (A) ci-après et de 90 à 25 % en poids du composant (B) ci-après à un traitement thermique dynamique qui est mis en oeuvre en présence d'un peroxyde organique, et au moins un composant choisi parmi les composants (C) et (D) ci-après, en une quantité non supérieure à 200 parties en poids pour 100 parties en poids du total des composants (A) et (B), la composition élastomère thermoplastique ayant les propriétés physiques <1> à <4> ci-après :

composant (A) : une résine composée des composants (A1) et (A2) ci-après :

composant (A1) : de 50 à 100 % en poids d'une résine d'un polymère cristallin du propylène, et
composant (A2) : de 50 à 0 % en poids d'une résine oléfinique autre que le composant (A1) ;

composant (B) : un élastomère composé des composants (B1) et (B2) ci-après :

composant (B1) : de 10 à 100 % en poids d'un caoutchouc copolymère propylène-oléfine ayant une teneur en propylène de 65 à 90 % en poids, et
composant (B2) : de 90 à 0 % en poids d'un caoutchouc copolymère oléfinique autre que le composant (B1) ;

composant (C) : de 5 à 200 % en poids d'au moins l'un des composants (C1) et (C2) ci-après:

composant (C1) : une résine d'un copolymère de l'éthylène ayant une masse volumique de 0,94 g/cm$^3$ ou moins, et
composant (C2) : une résine d'un polymère cristallin du propylène ; et

composant (D) : de 0 à 100 % en poids d'un caoutchouc copolymère de l'éthylène et d'une α-oléfine ayant de 3 à 12 atomes de carbone ;

propriétés physiques

<1> Le module d'élasticité en cisaillement au stockage G' lors d'une mesure de la visco-élasticité solide dynamique à 100°C, est compris entre $3 \times 10^6$ et $2 \times 10^7$ Pa, et la différence g entre le module d'élasticité en cisaillement au stockage G' à 100°C et celui à 140°C, représentée par l'équation (1) ci-après, n'est pas supérieure à 0,6 :

$$g = \log G' \, (100°C) - \log G' \, (140°C) \qquad (1);$$

<2> le module d'élasticité en cisaillement au stockage G' lors d'une mesure de la visco-élasticité solide dynamique à 190°C est dans la gamme de $1 \times 10^4$ à $1 \times 10^5$ Pa ;

<3> l'indice de relaxation des contraintes r, représenté par l'équation (2) ci-après, qui est un indice définissant la relaxation des contraintes à partir de la contrainte à $10^{-1}$ seconde jusqu'à la contrainte à $10^3$ secondes, après que l'on a procédé à une déformation de 300 % à 190°C, est de 0,38 ou plus :

$$r = \{\log G(t) \text{ (au bout de } 10^{-1} \text{ seconde) } - \log G'(t) \text{ (au bout de } 10^3 \text{ secondes)}\}/4 \qquad (2)$$

(où G(t) représente le module de relaxation) ; et

<4> le module d'élasticité à 100 % à 100°C d'une feuille de 0,35 mm d'épaisseur n'est pas supérieur à 15 kgf/cm$^2$.

**2.** Composition élastomère thermoplastique selon la revendication 1, dans laquelle le composant (A1) a une cristallinité de 40 à 80 % telle que mesurée par diffractométrie aux rayons X, et un indicé de fluidité (à 230°C, sous une charge de 2,16 kg) de 0,1 à 80 g/10 minutes.

**3.** Composition élastomère thermoplastique selon la revendication 1 ou 2, dans laquelle le composant (A2) est une résine d'un polymère de l'éthylène ayant une masse volumique de 0,88 à 0,97 g/cm$^3$.

**4.** Composition élastomère thermoplastique selon l'une quelconque des revendications 1 à 3, dans laquelle le composant (B1) est un caoutchouc copolymère propylène-éthylène ayant une viscosité Mooney $ML_{1+4}$ (100°C) de 10 à 200.

**5.** Composition élastomère thermoplastique selon l'une quelconque des revendications 1 à 4, dans laquelle le composant (B2) est un caoutchouc copolymère éthylène-propylène ou un caoutchouc terpolymère éthylène-propylène-diène non conjugué ayant une teneur en propylène de 15 à 60 % en poids de la quantité totale de l'éthylène et du propylène.

**6.** Composition élastomère thermoplastique selon l'une quelconque des revendications 1 à 5, dans laquelle la composition (I) comprend en outre au moins un composant choisi parmi les composants (E) et (F) ci-après en une quantité de 10 à 250 parties en poids pour 100 parties en poids du composant (A) :

composant (E) : un composé oléfinique à faible masse moléculaire ayant un indice de fluidité de 100 g/10 minutes ou plus tel que mesuré selon ASTM-D1238 à 230°C sous une charge de 2,16 kg, et un point de fusion de 80°C ou plus ; et

composant (F) : un copolymère séquencé du propylène composé des fragments de séquences (a) et (b) ci-après :

fragment de séquence (a) : un fragment de séquence ayant une teneur en propylène de 90 à 100 % en poids et un indice de fluidité à 230°C sous une charge de 2,16 kg de 50 g/10 minutes ou plus, choisi parmi les fragments (a1), (a2), et (a3) ci-après :

(a1) : un fragment de séquence d'un homopolymère du propylène,

(a2) : un fragment de séquence d'un copolymère statistique binaire, constitué de propylène et d'éthylène ou d'une $\alpha$-oléfine ayant de 4 à 12 atomes de carbone ; et

(a3) : un fragment contenant un fragment de séquence d'un homopolymère du propylène et un fragment de séquence d'un copolymère statistique binaire constitué de propylène et d'éthylène ou d'une α-oléfine ayant de 4 à 12 atomes de carbone ; et

fragment de séquence (b) : un fragment de séquence ayant une teneur en éthylène de 20 à 100 % en poids, choisi parmi les fragments (b1), (b2), et (b3) ci-après :

(b1) : un fragment de séquence d'un homopolymère de l'éthylène,
(b2) : un fragment de séquence d'un copolymère statistique binaire, constitué d'éthylène et d'une α-oléfine ayant de 3 à 12 atomes de carbone ; et
(b3) : un fragment contenant un fragment de séquence d'un homopolymère de l'éthylène et un fragment de séquence d'un copolymère statistique binaire constitué d'éthylène et d'une α-oléfine ayant de 3 à 12 atomes de carbone.

**7.** Composition élastomère thermoplastique selon la revendication 6, dans laquelle le composant (E) est un homopolymère du propylène, ou un copolymère statistique du propylène et 10 % en poids ou moins d'au moins une α-oléfine choisie parmi l'éthylène, le butène-1 et l'hexène-1.

**8.** Composition élastomère thermoplastique selon la revendication 6 ou 7, dans laquelle la quantité de l'α-oléfine autre que le propylène, contenue dans le copolymère séquencé du propylène, le composant (F), n'est pas supérieure à 30 % en poids du copolymère séquencé, et le pourcentage du fragment de séquence (a) dans le copolymère est de 70 à 95 % en poids.